# EUROPÄISCHE PATENTANMELDUNG

(11) **EP 3 335 848 A1**
(43) Veröffentlichungstag der Anmeldung: **20.06.2018**
(21) Anmeldenummer: 17207798.4
(22) Anmeldetag: 15.12.2017
(51) Int. Cl.: B28D 1/04, B28D 1/06, E04G 23/08, B23D 45/12

(54) **ANORDNUNG ZUM DURCHTRENNEN EINER WANDUNG EINES BAUTEILS**

(30) Priorität: 16.12.2016 DE 102016124573
(71) Anmelder: EnBW Energie Baden-Württemberg AG, 76131 Karlsruhe (DE)
(72) Erfinder: Feil, Hartmut, 74850 Schefflenz (DE); Matthe, Matthias, 74838 Limbach (DE)
(74) Vertreter: DREISS Patentanwälte PartG mbB

(57) **Zusammenfassung**

Anordnung zum Durchtrennen einer Wandung eines Bauteils zum Zwecke der Zerlegung des Bauteils, umfassend ein an der Wandung des Bauteils angeordnetes oder anordenbares Führungsmittel und ein entlang des Führungsmittels bewegbaren Schlitten mit einer daran angeordneten oder anordenbaren Trenneinrichtung zum Durchtrennen der Wandung.

## Beschreibung

Die Erfindung betrifft eine Anordnung zum Durchtrennen einer Wandung eines Bauteils zum Zwecke der Zerlegung des Bauteils. Die Erfindung betrifft auch ein dazugehöriges Verfahren.

Beim Rückbau von industriellen Anlagen, beispielsweise beim Rückbau von Kernkraftwerken, müssen regelmäßig Rohrleitungen, Behälter, insbesondere Stahlbehälter, Platten und andere eine Wandung aufweisende, insbesondere metallische oder polymere Bauteile, insbesondere Stahlkonstruktionen, unterschiedlicher Nenndurchmesser, Wandstärken und Materialbeschaffenheit zerlegt und entsorgt werden. Diese Einbauten werden im Zusammenhang mit der Erfindung als Bauteile bezeichnet. Ein davon abzutrennender oder abgetrennter Teil wird als "Bauteilabschnitt" bezeichnet. Anders formuliert kann man ein "Bauteil" als einen eine Wandung aufweisenden Gegenstand bezeichnen, der in einer technischen Anlage (Kraftwerk, Produktionsanlage, Chemische Fabrik oder dgl.) eingebaut ist und aus welchen Gründen auch immer demontiert werden soll. Die Bauteilwandung umschließt dabei oft ein Volumen. Die Bauteile sind also oft Hohlkörper. Um die Handhabung zu erleichtern erfolgt die Demontage in Abschnitten. Demnach werden Bauteilabschnitte nacheinander vom Bauteil abgetrennt und entsorgt.

Insbesondere beim Kernkraftwerksrückbau sind viele dieser Bauteile teilweise radioaktiv belastet und befinden sich an schwer zugänglichen Stellen, wodurch ein Komplettausbau und Abtransport für das Zerlegen an einem dafür geeigneten Ort nicht möglich ist. Auf Grund der radioaktiven Kontamination ist eine thermische Zerlegung nicht sinnvoll. Mechanische Zerlegeverfahren sind zu bevorzugen.

Ähnlich verhält es sich bei konventionellen verfahrenstechnischen Anlagen zum Beispiel in der chemischen Industrie, im Anlagenbau allgemein oder bei anderen industriellen (Produktions-)Anlagen. Die dort eingebauten Bauteile befinden sich oftmals an schwer zugänglichen Orten und können wegen ihres Gewichts und ihren Abmessungen nicht am Stück entsorgt werden.

Stand der Technik ist die manuelle Trennung der Bauteile vor Ort in Bauteilabschnitte mittels elektrischer Handsägen oder andere handgeführter Trenneinrichtungen, wobei mittels dieser Einrichtungen Schnitte in die Wandungen eingebracht werden, um so einzelne Bauteilabschnitte aus den Bauteilen herauszulösen. Hierbei besteht eine hohe körperliche Belastung durch mechanische Krafteinwirkung sowie durch Schwingungen und Lärm des Handwerkzeuges. Ferner befinden sich die Arbeiter in unmittelbarer Nähe des zu zerlegenden Bauteils und sind somit beispielsweise beim Kernkraftwerksrückbau auch einer erhöhten radiologischer Belastung ausgesetzt.

Bei Kernkraftwerken stellt sich zudem das Problem kontaminierter Bauteile, die nur unter strengsten Sicherheitsbedingungen abgebaut und entfernt werden dürfen.

Die vorliegende Erfindung hat die Aufgabe, Abhilfe für die Nachteile des Standes der Technik zu schaffen.

Diese Aufgabe wird durch eine Vorrichtung mit den Merkmalen des Anspruchs 1 gelöst. Es ist folglich eine Anordnung zum Durchtrennen einer Wandung eines Bauteils zum Zwecke der Zerlegung des Bauteils vorgesehen. Diese umfasst ein an der Wandung des Bauteils angeordnetes oder anordenbares Führungsmittel sowie einen entlang des Führungsmittels bewegbaren Schlitten. An dem Schlitten ist eine Trenneinrichtung zum Durchtrennen der Wandung angeordnet oder anordenbar.

Einerseits ist denkbar, dass das Führungsmittel ohne zusätzliche Befestigungsmittel beispielsweise unter Vorspannung an der Bauteilwandung angeordnet ist. Andererseits kann das Führungsmittel mit Befestigungsmitteln an die Wandung des zu zerlegenden Bauteils beispielsweise angeschraubt oder in sonstiger Weise befestigt sein. Bei den Wandungen handelt es sich zum Beispiel um Wandungen von Behältern oder Rohren, die folglich ein Volumen einschließen und demnach als Hohlkörper ausgebildet sind.

Um einen Bauteilabschnitt aus einem Bauteil herauszulösen, muss die Wandung eines Bauteils durchtrennt werden. Hierbei wird zunächst das Führungsmittel an der Wandung angeordnet. Normalerweise erfolgt dies an der Außenseite der Wandung. Weiterhin wird ein entlang des Führungsmittels bewegbarer Schlitten am Führungsmittel angeordnet. Schließlich wird am Schlitten eine Trenneinrichtung zum Durchtrennen der Wandung angeordnet. Durch Bewegung des Schlittens entlang des Führungsmittels sowie durch Betätigen der Trenneinrichtung kann ein Schnitt in die Wandung eingebracht werden und somit die Wandung durchtrennt werden. Mittels eines oder mehrerer Schnitte, die beispielsweise horizontal oder vertikal verlaufen können, kann ein Bauteilabschnitt vom Bauteil gelöst und der Entsorgung zugeführt werden.

Im Gegensatz zum Stand der Technik, müssen Arbeiter folglich keine hohen körperlichen Belastungen mehr aushalten. Stattdessen muss lediglich das Führungsmittel an der Wandung angeordnet werden. Der eigentliche Trennvorgang mittels der Trenneinrichtung kann ferngesteuert erfolgen. Somit sind die Arbeiter dem beim Abtrennen entstehenden Lärm nicht direkt ausgesetzt und müssen nicht mehr in der unmittelbaren Nähe von kontaminierten, zu zerlegenden Bauteilen Bauteilabschnitte abtrennen. Insbesondere beim Rückbau von Kernkraftwerken wird daher die Strahlenbelastung der Arbeiter deutlich reduziert. Außerdem wird die Unfallgefahr drastisch reduziert.

Die erfindungsgemäße Vorrichtung eignet sich für die Demontage beliebiger Einbauten oder Gegenstände (Bauteile), sei es innerhalb eines Gebäudes oder im Freien.

Eine vorteilhafte Weiterbildung der Erfindung sieht vor, dass
am Schlitten eine erste Antriebseinheit zum Bewegen des Schlittens entlang des Führungsmittels vorgesehen ist. Zusätzlich oder alternativ kann eine zweite Antriebseinheit zum Betätigen der Trenneinrichtung am Schlitten vorgesehen sein. Hierdurch kann insbesondere auch ein ferngesteuertes Betätigen des Schlittens sowie der Trenneinrichtung ermöglicht werden. Dabei können die Antriebseinrichtung und/oder die Trenneinrichtung hydraulisch, pneumatisch oder elektrisch betätigbar sein. Eine elektrische Betätigung hat sich als besonders vorteilhaft herausgestellt, da hierbei lediglich eine Stromversorgung sichergestellt werden muss, was leitungsgebunden oder auch durch eine Batterie erfolgen kann.

Vorteilhaft ist auch, wenn das Führungsmittel entlang einer Umfangsfläche des Bauteils umlaufend angeordnet ist. So können insbesondere Rohrabschnitte oder Abschnitte von insbesondere zylindrischen Behältern bzw. zylindrischen Behälterabschnitten auf einfache Art und Weise vom Rohr bzw. Behälter abgetrennt werden, indem lediglich ein um den Umfang umlaufender Schnitt durchgeführt werden muss. Unter Umständen ist ein zweiter parallel dazu verlaufender Schnitt notwendig, insbesondere beim erstmaligen Heraustrennen eines Bauteilabschnitts von einem Bauteil.

Besonders bevorzugt ist, wenn das Führungsmittel als Zahnstange ausgebildet ist. Hierbei kann die Antriebseinheit zum Bewegen des Schlittens insbesondere ein mit der Zahnstange zusammenwirkendes Zahnrad umfassen. Dies bietet sich insbesondere bei vertikalen Schnitten an. Die Zahnstange kann dabei beispielsweise an die Wandung angeschraubt werden. Anderseits ist auch denkbar, dass diese mit einer Kette oder einem Spanngurt an der Wandung festgezurrt ist.

Besonders bevorzugt ist ferner, wenn das Führungsmittel als Kette mit einer Vielzahl Kettenglieder ausgebildet ist. Dies hat sich insbesondere bei Schnitten in Umfangsrichtung als besonders geeignet erwiesen. Die Kette kann dabei insbesondere als Rollenkette, weiter insbesondere als Einfach-, Duplex oder Triplexkette ausgebildet sein. Eine derartige Kette kann sich besonders flexibel an unterschiedlich ausgebildete Konturen von Wandungen anpassen.

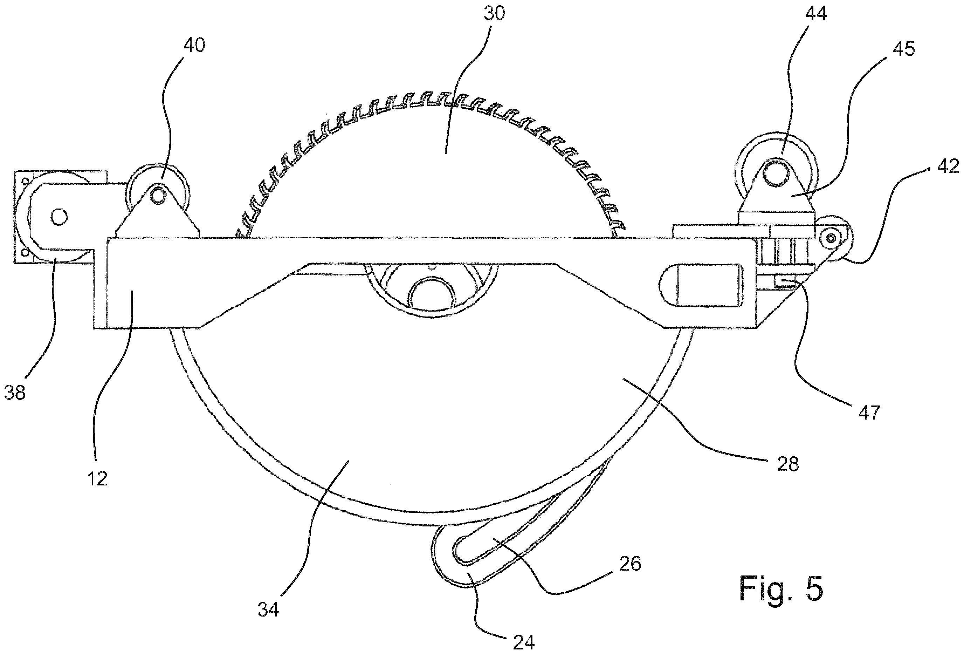

Vorteilhafterweise liegt die Kette dabei unter Vorspannung an der Wandung an. Insbesondere kann die Kette um den Außenumfang insbesondere eines Behältnisses oder Rohres angeordnet sein. Hierbei sind keine weiteren Befestigungsmittel notwendig. Andererseits können auch zusätzliche Befestigungsmittel zur Sicherung der Kette an der Wandung, beispielsweise Sicherungsstifte, vorgesehen sein. Ein Vorspannen der Kette gegen die Wandung kann insbesondere mit einem mechanisch, elektrisch oder pneumatisch betätigbaren Kettenspanner erfolgen. Ein einfaches Ausführungsbeispiel eines mechanischen Kettenspanners wird weiter unten im Zusammenhang mit der Figur 5 erläutert.

Besonders bevorzugt ist hierbei weiter, wenn die Kette mehrgliedrig, insbesondere doppelgliedrig, mit zwei oder drei quer zur Haupterstreckung der Kette übereinander liegenden Kettengliedern ausgebildet ist. Diese sogenannten Duplexketten bzw. Triplexketten haben sich als besonders vorteilhaft erwiesen, weil sie bei Schnitten in horizontaler Richtung eine ausreichende Steifigkeit in vertikaler Richtung haben, um den Schlitten zu führen. Ein unerwünschtes Verrutschen der Kette entlang des insbesondere zylindrischen Bauteils wird hierbei in vorteilhafter Weise verhindert, insbesondere weil sich die Kettenglieder hierbei gegeneinander verdrehen und sichern können. Zusätzliche Befestigungsmittel können regelmäßig entbehrlich sein.

Vorzugsweise presst die Kette den Schlitten gegen die Wandung, so dass die während der Bearbeitung auftretenden Schnittkräfte, den Schlitten nicht von der Wandung abheben. Beim Trennvorgang kann der Schlitten folglich unter Vorspannung entlang der Wandung bewegt werden, was auch zu einer sicheren Schnittführung beiträgt. Während des gesamten Trennvorgangs ist dabei der Schlitten mittels der Kette gegen die Wandung vorgespannt/gepresst.

Eine besonders bevorzugte Weiterbildung der Erfindung ergibt sich daraus, dass die Antriebseinrichtung ein Treibrad zur Bewegung des Schlittens entlang der Kette umfasst. Das Treibrad kann als Ritzel ausgebildet sein, das mit der Kette oder der Zahnstange formschlüssig zusammenwirkt, so dass ein sicherer Vorschub gewährleistet ist. Diese Anordnung ist außerdem besonders einfach aufgebaut.

Eine weitere Weiterbildung der Erfindung sieht vor, dass wenigstens eine Bildaufnahmeeinrichtung, insbesondere eine Kamera, zur Beobachtung der Trenneinrichtung, vorgesehen ist. Die Bildaufnahmeeinrichtung kann dabei am Schlitten vorgesehen sein und insbesondere derart angeordnet sein, dass das Durchtrennen der Wandung durch die Trenneinrichtung beobachtet werden kann. Die Aufnahmen der Bildaufnahmeeinrichtung können dabei leitungsgebunden oder kabellos an eine Bedieneinrichtung übertragen werden. Eine Bedienperson hat folglich auch in schwer zugänglichen Arbeitsbereichen Kontrolle darüber, ob eine Wandung ordnungsgemäß durchtrennt wird. Hierbei ist denkbar, dass optisch erfasst wird, ob der Trennvorgang abgeschlossen ist und nach erfolgtem Trennvorgang ein Signal an die Bedieneinrichtung übermittelt wird.

In diesem Zusammenhang ist auch denkbar, dass der Abschluss des Trennvorgangs detektiert wird. Dies kann beispielsweise über die Leistungsaufnahme der Trenneinrichtung oder beispielsweise auch akustisch erfolgen.

Vorzugsweise umfasst die Trenneinrichtung eine Kreissäge, eine Säbel- oder Stichsäge oder einen Nibbler zum Durchtrennen der Wandung, also handelsübliche handgeführte Maschinen. Andererseits kann die Trenneinrichtung beispielsweise auch als Fräse, Trennschleifer oder Spaltmesser ausgebildet sein. Als besonders vorteilhaft hat es sich hierbei erwiesen, wenn die am Schlitten angeordnete Trenneinrichtung auswechselbar ist. Je nach Anforderungen, beispielsweise Wandungsstärke oder Materialbeschaffenheit kann folglich eine unterschiedliche Trenneinrichtung verwendet werden. Als besonders günstig hat sich allerdings eine Kreissäge mit einem Kreissägeblatt erwiesen.

Vorteilhafterweise ist die Trenneinrichtung dabei am Schlitten verschwenkbar angeordnet ist. Hierdurch kann die Tiefe des Eindringens des Trennwerkzeugs der Trenneinrichtung in die Wandung gesteuert werden. Ferner kann ein Eindringen des Trennwerkzeugs zu Beginn des Trennprozesses in die Wandung bzw. ein erstes Durchtrennen der Wandung auf besonders einfache Art ermöglicht werden. Zudem kann hierdurch ein Auswechseln der Trenneinrichtung auf besonders einfache Art ermöglicht werden. Dabei kann ein Rückstellelement, insbesondere eine Rückstellfeder vorgesehen sein, welches die Trenneinrichtung gegen die Wandung drückt. Andererseits kann das Verschwenken auch maschinell erfolgen.

Besonders bevorzugt ist, wenn die Anordnung ferngesteuert bedienbar ist. Hierbei kann die Fernsteuerung kabellos oder leitungsgebunden erfolgen. Die Ansteuerung kann dabei insbesondere von einer Bedieneinheit aus erfolgen, wobei die Übertragung der Steuersignale insbesondere kabellos beispielsweise mit Funk, WLAN oder Bluetooth erfolgen kann. Insbesondere beim Rückbau von Kernkraftwerken, beispielsweise beim Rückbau kontaminierter Rohre oder Behälter, kann dadurch ein verbesserter Strahlenschutz für das Bedienpersonal gewährleistet werden. Hierbei kann eine Ansteuerung auch von außerhalb des im Rückbau befindlichen Kraftwerksgebäudes ermöglicht werden.

Die eingangs gestellte Aufgabe wird auch gelöst durch ein Verfahren zum Durchtrennen einer Wandung eines Bauteils zum Zwecke der Zerlegung des Bauteils unter Verwendung einer erfindungsgemäßen Anordnung. Das Verfahren umfasst folgende Schritte: a) Anordnen eines Führungsmittels an der Wandung eines Bauteils; b) Anordnen eines Schlittens mit einer daran angeordneten Trenneinrichtung am Führungsmittel; c)Durchtrennen der Wandung unter Bewegung des Betätigungsmittels und Betätigung der Trenneinrichtung.

Mit diesem Verfahren können im Vergleich zum Stand der Technik insbesondere Arbeiter beim Rückbau von Bauteilen entlastet werden. Ein händisches Betätigen von Trenneinrichtungen zum Durchtrennen von Wandungen, um einen Bauteilabschnitt von einem Bauteil herauszulösen, entfällt. Ferner können hierdurch nicht nur die körperlichen Belastungen, sondern auch Lärmbelästigungen sowie beim Rückbau von Kernkraftwerken auch Strahlenbelastungen drastisch reduziert werden.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden. Es zeigen:
Figur 1: Perspektivische Ansicht einer erfindungsgemäßen Anordnung gemäß einer ersten Ausführungsform;
Figur 2: Perspektivische Ansicht einer erfindungsgemäßen Anordnung gemäß einer zweiten Ausführungsform;
Figur 3: Perspektivische Ansicht des Schlittens gemäß den Figuren 1 und 2 mit daran angeordneter Trenneinrichtung;
Figur 4: Vorderansicht der Darstellung gemäß Figur 3;
Figur 5: Draufsicht auf die Darstellung gemäß Figur 3;
Figur 6: Vorderansicht der Darstellung gemäß Figur 3 ohne Trenneinrichtung;
Figur 7: Draufsicht auf die Darstellung gemäß Figur 6;
Figur 8: Seitenansicht der Darstellung gemäß Figur 6;
Figur 9: Vorderansicht (a), Draufsicht (b) und Seitenansicht (c) des Motorträgers der Darstellung gemäß Figur 6;
Figur 10: Vorderansicht (a), Draufsicht (b) und Seitenansicht (c) des Ritzelträgers der Darstellung gemäß Figur 6;

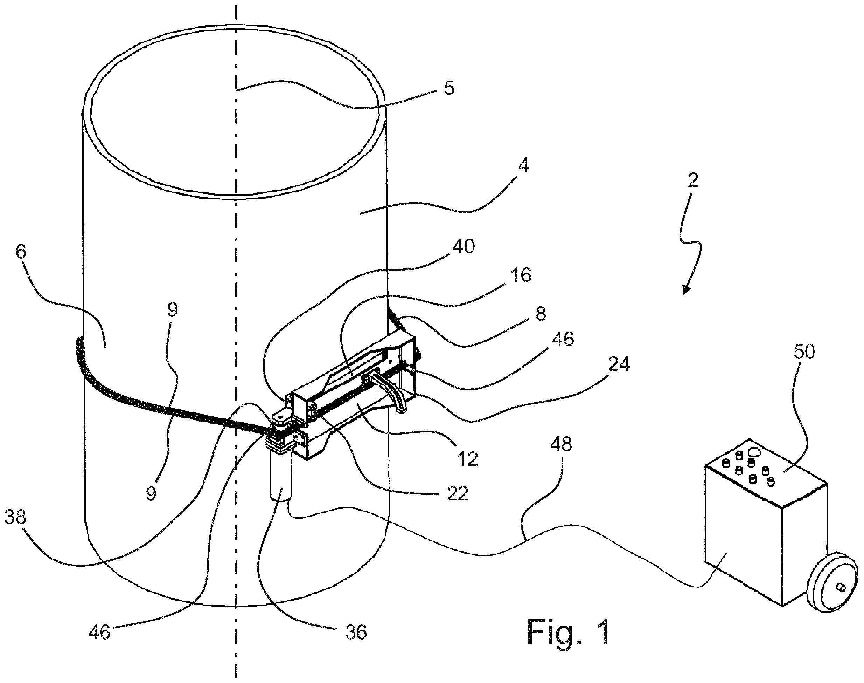

Die Figur 1 zeigt eine insgesamt mit dem Bezugszeichen 2 bezeichnete Anordnung zum Durchtrennen einer Wandung 6 eines Bauteils 4 zum Zwecke der Zerlegung des Bauteils 4. Das Bauteil 4 kann chemisch oder radioaktiv kontaminiert sein. Bei dem Bauteil 4 handelt es sich beispielsweise um einen kreiszylindrischen Behälter oder Rohrabschnitt eines Kernkraftwerks. Die Wandung 6 des Bauteils 4 umschließt folglich ein Volumen ein. Das Bauteil 4 ist folglich als Hohlkörper ausgebildet. Die Erfindung ist nicht auf die Zerlegung von Hohlkörpern beschränkt.

Um das Bauteil 4 zu demontieren, muss die Wandung 6 durchtrennt werden, um so Bauteilabschnitte herauszulösen. Diese Bauteilabschnitte können sodann der Entsorgung zugeführt werden.

Stand der Technik ist die manuelle Trennung der Bauteile 4 vor Ort in Bauteilabschnitte mittels elektrischer Handsägen oder anderer handgeführter Trenneinrichtungen, wobei mittels dieser Einrichtungen Schnitte in die Wandungen 4 eingebracht werden, um so einzelne Bauteileabschnitte aus den Bauteilen herauszulösen. Diese Vorgehensweis ist für die Arbeiter im Hinblick auf die körperliche Belastung, die Lärmbelastung sowie Strahlenbelastung sehr ungünstig.

Daher erfolgt der Rückbau vorliegend demgegenüber in vorteilhafter Weise mittels der erfindungsgemäßen Anordnung 2.

Die Anordnung 2 umfasst dabei ein an der Wandung 6 des Bauteils 4 angeordnetes Führungsmittel 8. Gemäß Figur 1 ist das Führungsmittel 8 dabei als sogenannte doppelte Rollenkette (Duplexkette) oder Triplexkette mit einer Vielzahl von Kettengliedern 9 ausgebildet. Das Führungsmittel 8 liegt dabei unter Vorspannung an der Wandung 6 an und läuft vollständig um die Umfangsfläche des Bauteils 4 quer zur Mittellängsachse 5. Zusätzliche Befestigungsmittel zur Sicherung des Führungsmittels 8 sind entbehrlich. Das Führungsmittel 8 ist hierbei mittels eines Kettenspanners (nicht sichtbar) gegen die Wandung 6 vorgespannt.

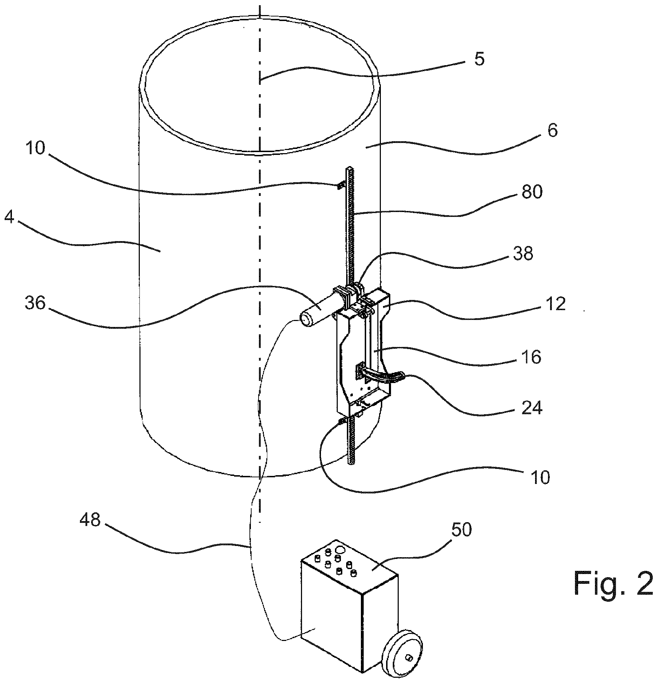

Demgegenüber ist das Führungsmittel 80 gemäß Figur 2 als Zahnstange ausgebildet. Das Führungsmittel 80 ist hierbei parallel zur Mittellängsachse 5 an der Außenseite der Wandung 6 mittels Schrauben 10 befestigt. Denkbar wäre auch ein Festzurren der Zahnstange 80 mittels der Kette 8 an der Wandung 6 oder die Verwendung eines Spanngurtes, um die Zahnstange 80 an der Wandung 6 zu befestigen.

An den Führungsmitteln 8,80 ist ein entlang der Führungsmittel 8,80 bewegbarer Schlitten 12 angeordnet. Aus der Figur 1 wird deutlich, dass der Schlitten 12 zwischen Kette (Führungsmittel 8) und Wandung 6 angeordnet ist. Dadurch wird der Schlitten durch die Spannung der Kette (des Führungsmittels 8) gegen die Wandung 6 gepresst.

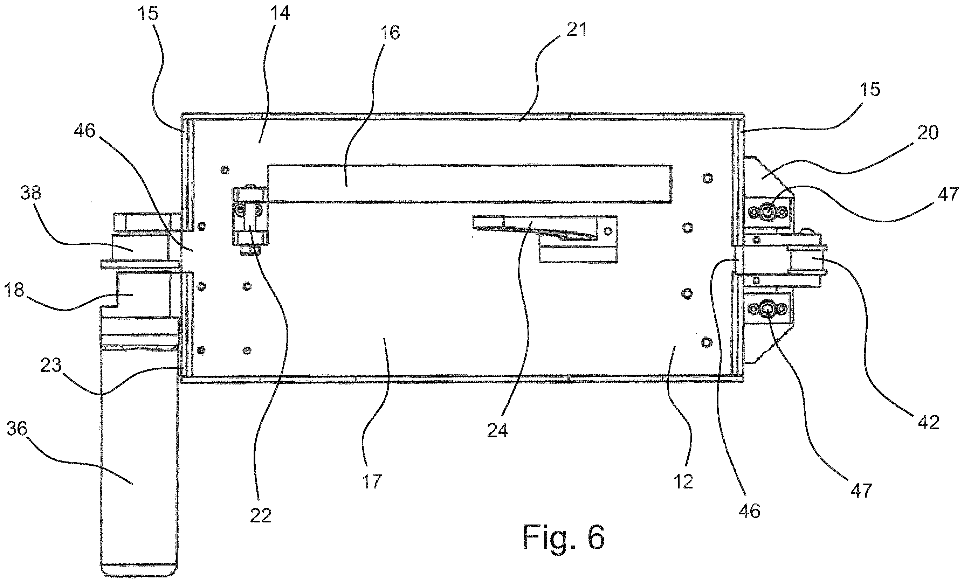

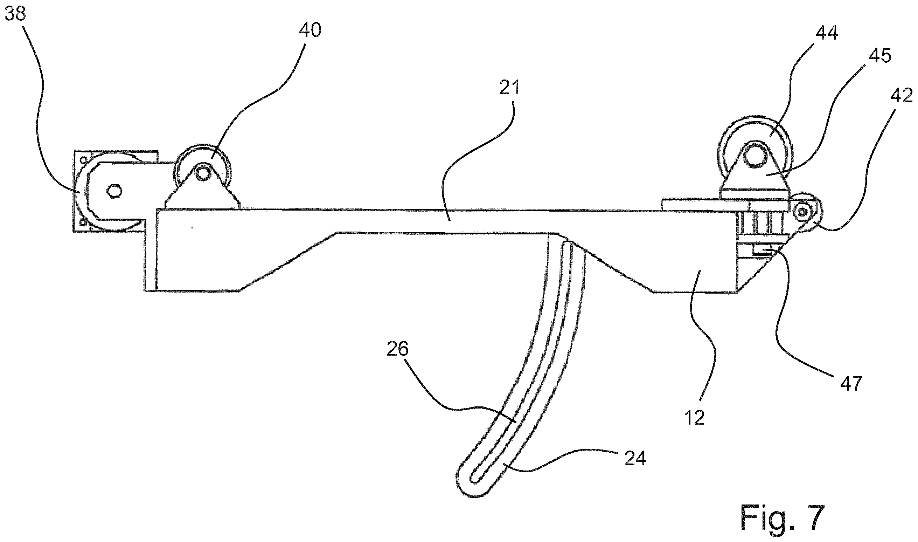

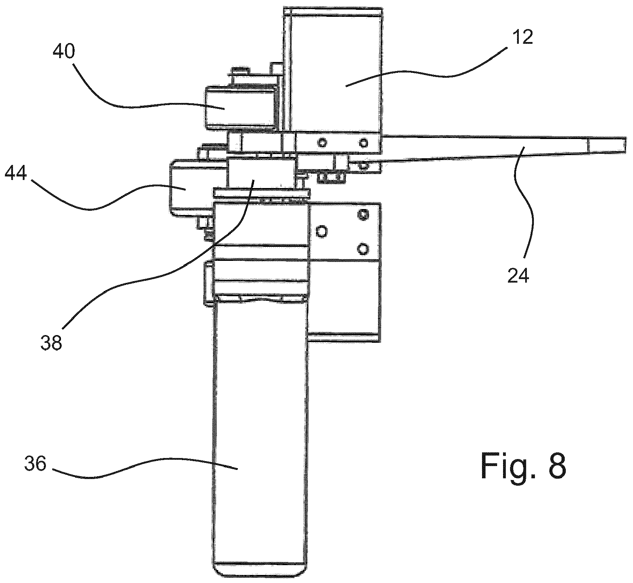

Wie in den Figuren 6 bis 8 deutlich zu erkennen, weist der Schlitten 12 dabei ein plattenartiges, rechteckiges Grundteil 14 mit einem Durchbruch 16 auf.

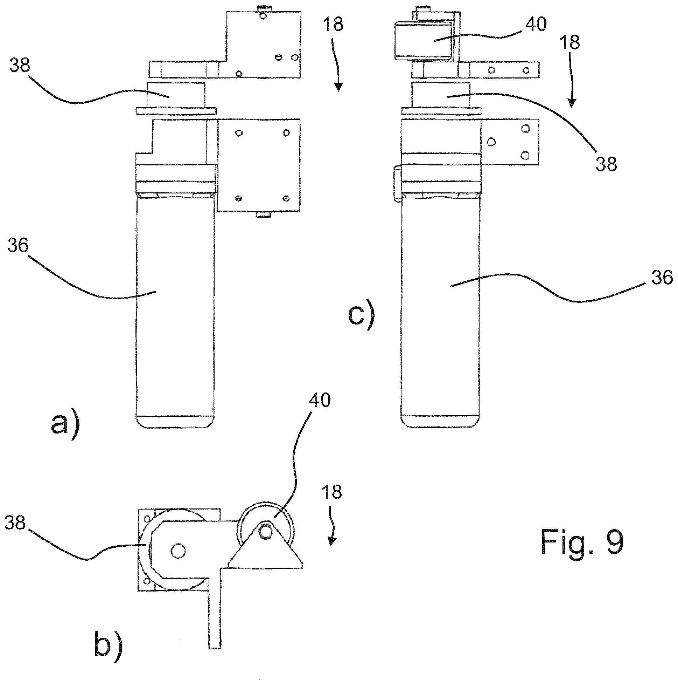

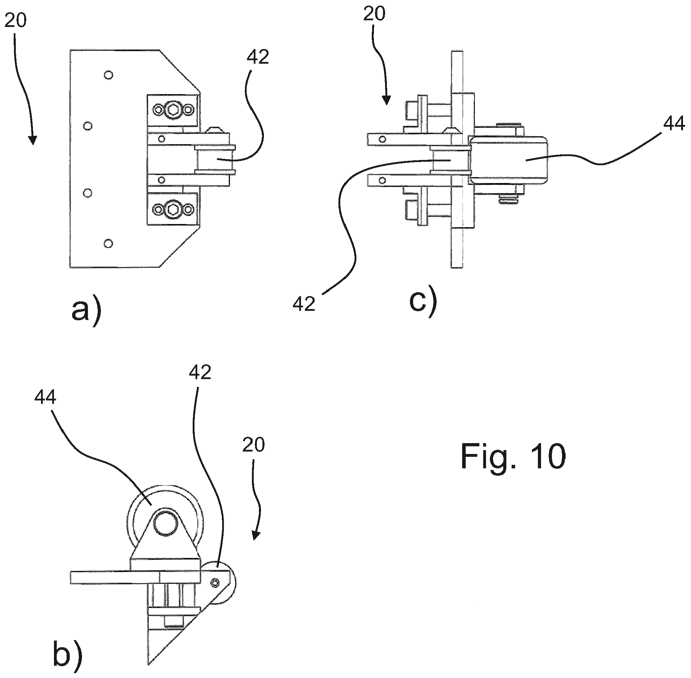

An den Breitseiten 15 des Grundteils 14 sind ein Motorträger 18 (vgl. Figur 9) und ein Ritzelträger 20 (vgl. Figur 10) angeschraubt.

Die Rückseite 17 des Grundteils 14 ist während des Betriebs der Wandung 6 abgewandt und weist ein Befestigungselement 22 und einen Führungssteg 24 mit einer Nut 26 auf.

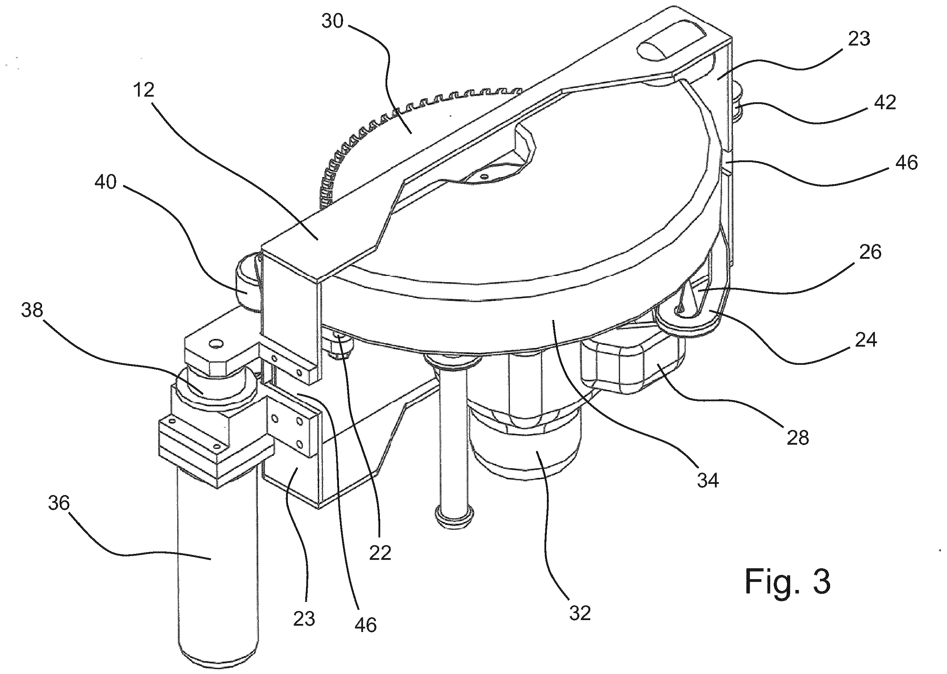

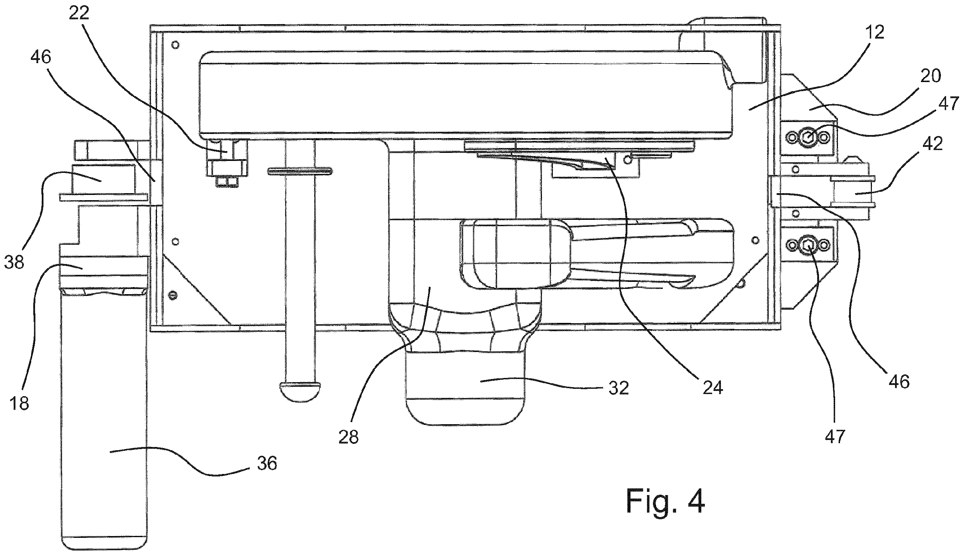

Wie in den Figuren 3 und 4 gezeigt ist, ist am Befestigungselement 22 eine Trenneinrichtung 28 schwenkbar befestigbar. Die Trenneinrichtung 28 umfasst dabei ein Kreissägeblatt 30 sowie eine Antriebseinrichtung 32, welche insbesondere elektrisch betreibbar ist. Ferner weist die Trenneinrichtung 28 ein nicht gezeigtes von der Antriebseinrichtung 32 antreibbares Eingriffselement auf, welches in die Nut 26 des Führungsstegs 24 eingreift, sodass die Trenneinrichtung 28 um das Befestigungselement 22 entlang des Führungsstegs 24 schwenkbar verlagerbar ist. Ferner weist die Trenneinrichtung 28 ein optionales Gehäuse 34 auf.

Die Trenneinrichtung 28 ist leicht auswechselbar, sodass statt einer kreissägenartigen Ausführung auch Fräsen, Stichsägen, Nibbler oder Spaltmesser am Schlitten 12 angeordnet werden können, um somit flexibel unterschiedliche Bauteile 4 mit Wandungen 6 unterschiedlicher Wandstärke und unterschiedlicher Materialbeschaffenheit zerlegen zu können.

Das Befestigungselement 22 kann dabei auch ein Rückstellelement, insbesondere eine Rückstellfeder aufweisen, welches die Trenneinrichtung 28 in Richtung der Wandung 6 drängt bzw. drückt.

Von den Längsseiten der Grundplatte 14 ragen kurze Seitenwände 21 ab (in Betrieb sind diese der Wandung 6 angewandt; vgl. Fig. 6). Der Motorträger 18 und der Ritzelträger 20 sind an den gegenüberliegenden Seitenwänden 23 der Breitseiten 15 angeschraubt.

Der Motorträger 18 umfasst eine elektrisch antreibbare Antriebseinrichtung 36 mit einem als Kettenritzel oder Zahnrad ausgebildeten Treibrad 38, das im Betrieb in die Kette 8 bzw. die Zahnstange 80 eingreift. Der Motorträger 18 verläuft ähnlich einem 90°-Winkelträger entlang der Seitenwand 23 sowie entlang des Grundteils 14. Ferner weist der Motorträger 18 ein Rad 40 zur Anlage an die Wandung 6 auf.

Der Ritzelträger 20 verläuft ebenfalls ähnlich einem 90°-Winkelträger entlang der Seitenwand 23 sowie entlang des Grundteils 14. Der Ritzelträger 20 weist ein Ritzel 42 auf. Ferner weist der Ritzelträger 20 ebenfalls ein Rad 44 zur Anlage an die Wandung 6 auf (seihe Figur 5).

Das Rad 44 ist an einem Radträger 45 drehbar gelagert. Der Radträger 45 wiederum ist so an dem Ritzelträger 20 befestigt, dass er orthogonal zu dem Grundteil 14 verschiebbar ist. Genauer gesagt ist der Radträger 45 orthogonal zur einer durch das Grundteil 14 aufgespannten Ebene relativ zu dem Ritzelträger 20 verschiebbar.

Zwischen Ritzelträger 20 und Radträger 45 sind Spannschrauben 47 vorgesehen. Durch Verdrehen der Spannschrauben 47 kann die Position des Rads 44 relativ zu dem Grundteil 14 und dem Ritzel 42 verändert und auf diese Weise die Kette/das Führungsmittel 8 gespannt werden.

Die Seitenwände 23 der Breitseiten 15 weisen zudem jeweils eine Aussparung 46 (vgl. Fig. 3) auf.

Die Antriebseinheit 36 sowie die Antriebseinrichtung 32 sind ferngesteuert leitungsgebunden (vergleiche Figuren 1 und 2) mittels Leitungen 48 mit einer Bedieneinheit 50 verbunden und können somit ferngesteuert betätigt werden. Denkbar ist auch eine drahtlose Verbindung.

Das Verfahren zur Durchtrennung der Wandung 6 des Bauteils 4, um das Bauteil 4 zu zerlegen ist sodann wie folgt:

Um, wie in Figur 1 gezeigt, einen horizontalen Schnitt zu machen, wird das Führungsmittel 8 um das Treibrad 38 durch die Aussparungen 46 und die Rückseite des Schlittens 12, um das Ritzel 42 sowie um die Wandung 6 umlaufend umgelegt. Der Schlitten 12 ist folglich formschlüssig am Führungsmittel 8 angeordnet. Mittels eines Kettenspanners wird die Kette gegen die Wandung 6 vorgespannt, wobei gleichzeitig auch der Schlitten 12 gegen die Wandung vorgespannt wird, und wobei der Schlitten 12 mittels der Drehräder 40, 44 an der Wandung 6 anliegt.

Daraufhin wird die Trenneinrichtung 28 am Befestigungselement 22 des Grundteils 12 angeordnet.

Sodann wird die Antriebseinrichtung 32 gestartet, um das Kreissägeblatt 30 anzutreiben. Die Trenneinrichtung 28 kann zur Wandung 6 hin entlang des Führungsstegs 24 geschwenkt werden, um sodann die Wandung 6 zu durchbrechen. Sodann wird die Antriebseinrichtung 36 zusätzlich betätigt, sodass der Schlitten 12 entlang des Führungsmittels 8 bewegt wird, und somit die Wandung 6 des Bauteils 4 entlang des gesamten Umfangs durchtrennt wird. Die Räder 40, 44 rollen dabei an der Wandung 6 des Bauteils 4 ab, wobei während des gesamten Trennvorgangs der Schlitten 12 unter Vorspannung an der Wandung 6 anliegt.

Der Trennvorgang erfolgt dabei ferngesteuert, sodass die Arbeiter vor Lärm, Schmutz und Strahlung geschützt werden können.

Sofern ein vertikaler Schnitt durchgeführt werden muss, wie in Figur 2 gezeigt, so wird zuerst das Führungsmittel 80 an die Wandung 6 angeschraubt. Sodann wird der Schlitten 12 mit nicht gezeigten Befestigungsmitteln am Führungsmittel 80 befestigt. Ferner wird die Trenneinrichtung 28 befestigt. Sodann wird wiederum die Trenneinrichtung 28 mittels der Antriebseinrichtung 32 angetrieben und in Richtung der Wandung geschwenkt, sodass die Wandung 6 durchtrennt wird. Daraufhin wird mittels der Antriebseinrichtung 36 der Schlitten 12 entlang des Führungsmittels 80 bewegt, sodass ein vertikaler Schnitt durchgeführt wird.

Insbesondere mittels einer Kombination aus horizontalen und vertikalen Schnitten kann somit ein Bauteilabschnitt von einem Bauteil 4 herausgelöst werden und der Entsorgung zugeführt werden.

Die erfindungsgemäße Anordnung 2 kann insbesondere an schwer zugänglichen Stellen eingesetzt werden, wo ein Komplettausbau und Abtransport eines Bauteils nicht möglich ist, sondern das Bauteil 4 in Bauteilabschnitte zerlegt werden muss, um diese entsorgen zu können, wobei zur Zerlegung Wandungen 6 durchtrennt werden.

## Patentansprüche

1. Anordnung (2) zum Durchtrennen einer Wandung (6) eines Bauteils (4) zum Zwecke der Zerlegung des Bauteils (4), umfassend ein an der Wandung (6) des Bauteils (4) angeordnetes oder anordenbares Führungsmittel (8) und ein entlang des Führungsmittels (8) bewegbaren Schlitten (12) mit einer daran angeordneten oder anordenbaren Trenneinrichtung (28) zum Durchtrennen der Wandung (6).

2. Anordnung (2) nach Anspruch 1, **dadurch gekennzeichnet, dass** am Schlitten (12) eine erste Antriebseinrichtung (36) zum Bewegen des Schlittens (12) entlang des Führungsmittels (8) und/oder eine zweite Antriebseinrichtung (32) zum Betätigen der Trenneinrichtung (28) vorgesehen ist.

3. Anordnung (2) nach einem der vorhergehenden Ansprüche, **dadurch gekennzeichnet, dass** die Antriebseinrichtung (36) und/oder die Trenneinrichtung (28) hydraulisch, pneumatisch, oder elektrisch betätigbar ist bzw. sind.

4. Anordnung (2) nach einem der vorhergehenden Ansprüche, **dadurch gekennzeichnet, dass** das Führungsmittel (8, 80) entlang einer Umfangsfläche der Wandung (6) des Bauteils (4) umlaufend angeordnet ist.

5. Anordnung (2) nach einem der vorhergehenden Ansprüche, **dadurch gekennzeichnet, dass** das Führungsmittel (8, 80) als Zahnstange (80) ausgebildet ist.

6. Anordnung (2) nach einem der vorhergehenden Ansprüche 1 bis 4, **dadurch gekennzeichnet, dass** das Führungsmittel (8, 80) als Kette (8) mit einer Vielzahl Kettenglieder ausgebildet ist.

7. Anordnung (2) nach Anspruch 6, **dadurch gekennzeichnet, dass** die Kette (8) mehrgliedrig, insbesondere als Duplex- oder Triplexkette, mit zwei, drei oder mehr quer zur Haupterstreckung der Kette (8) übereinander liegenden Kettengliedern (9) ausgebildet ist.

8. Anordnung (2) nach Anspruch 6 oder 7 und Anspruch 4, **dadurch gekennzeichnet, dass** die Kette (8) unter Vorspannung an der Wandung (6) anliegt.

9. Anordnung (2) nach Anspruch 8, **dadurch gekennzeichnet, dass** die Kette (8) der Schlitten (12) gegen die Wandung (6) vorspannt.

10. Anordnung (2) nach einem der Ansprüche 2 bis 9, **dadurch gekennzeichnet, dass** die Antriebseinrichtung (36) ein mit dem Führungsmittel (8, 80) zusammenwirkendes Treibrad (38) zur Bewegung des Schlittens (12) entlang der Kette (8) umfasst.

11. Anordnung (2) nach einem der vorhergehenden Ansprüche, **dadurch gekennzeichnet, dass** wenigstens eine Bildaufnahmeeinrichtung, insbesondere zur Beobachtung der Trenneinrichtung (28), vorgesehen ist.

12. Anordnung (2) nach einem der vorhergehenden Ansprüche, **dadurch gekennzeichnet, dass** die Trenneinrichtung (28) ein Kreissäge- oder Stichsägeblatt, einen Trennschleifer oder einen Nibbler zum Durchtrennen der Wandung (6) umfasst.

13. Anordnung (2) nach einem der vorhergehenden Ansprüche, **dadurch gekennzeichnet, dass** die Trenneinrichtung (28) am Schlitten (12) verschwenkbar angeordnet oder anordenbar ist.

14. Anordnung (2) nach einem der vorhergehenden Ansprüche, **dadurch gekennzeichnet, dass** sie ferngesteuert bedienbar ist.

15. Anordnung (2) nach einem der vorhergehenden Ansprüche, **dadurch gekennzeichnet, dass** die Fernsteuerung kabellos oder leitungsgebunden erfolgt.

16. Verfahren zum Durchtrennen einer Wandung (6) eines Bauteils (4) zum Zwecke der Zerlegung des Bauteils (4) unter Verwendung einer Anordnung (2) nach einem der vorhergehenden Ansprüche, umfassend folgende Schritte:
a. Anordnen eines Führungsmittels (8, 80) an der Wandung (6) eines Bauteils (4);
b. Anordnen eines Schlittens (12) mit einer daran angeordneten oder anordenbaren Trenneinrichtung (28) am Führungsmittel (8, 80);
c. Durchtrennen der Wandung (6) unter Bewegung des Schlittens (12) und Betätigung der Trenneinrichtung (28).
